# EUROPEAN PATENT APPLICATION

(11) **EP 2 273 720 A1**
(43) Date of publication of application: **12.01.2011**
(21) Application number: 09447031.7
(22) Date of filing: 10.07.2009
(51) Int. Cl.: H04L 12/10

(54) **An electronic device comprising LED indicators and an aenergy saving method at an electronic device**

(71) Applicant: Thomson Telecom Belgium, 2650 Edegem (BE)
(72) Inventor: Van Oost Koen, 2650 Edegem (BE); De Smedt, Alex, 2650 Edegam (BE)
(74) Representative: Berthier, Karine

(57) **Abstract**

The present invention concerns an electronic device comprising more than one electronic indicator, an electronic indicator being adapted to indicate a state of a feature of the device, the state being among others set to enabled, disabled or enabling, the electronic indicator consuming energy, and ECO indicator configuring means for setting for each electronic indicator the normal mode of operation, the normal mode corresponding to a state of the feature, and activating a second indicator and deactivating the more than one electronic indicator when the more than one indicator are all in a normal mode of operation.

## Description

### FIELD OF THE INVENTION

The present invention relates generally to residential gateways and in particular to an energy saving method for a series of LED indicators of a residential gateway. It is also applicable to any system, containing a series of LED indicators, when LEDs at a certain point in time enter a steady mode indication status.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A home gateway usually runs through a number of states when coming into operation after a power-on. A new state may depend upon the previous ones. The different states are usually indicated through a number of Light Emitting Diodes, noted LEDs hereinafter. For example, the power LED is first set to power-ON indication. Then, successively, the Ethernet LED, the WLAN LED, the WAN physical layer (e.g. xDSL/ATM) LED, the WAN Ethernet & authentication LED, the WAN IP connectivity (IP address) LED, and also the VolP service LED are showing the related service activation. Every mentioned LED indication and related function activation may go through a number of transition sub-states, which are indicated by different LED coding, such as different colors, appearing in a blinking or solid manner. This State-mode information indicated by the LEDs is adapted to show if a port or a service is active or inactive. This information is very useful to the user. If a service fails, the user can derive from the LED indications which state the system has reached. For example, if there is IP connectivity, but the VolP LED remains off, the user knows that he can surf on the Internet and is not able to perform voice over IP calls. When a communication port or a service is active, traffic may then happen. Active traffic can also be shown with LEDs. The same LED that shows if a port or a service is active can be used to show if that port or service is actually carrying traffic. The LED shows this by flickering. For example, an Ethernet port traffic is usually indicated by a Traffic-mode LED attached to the port. Also, a State-mode VoIP LED starts flickering as a traffic-mode LED when a call takes place.

Once a LED is showing a normal operational state, the information value of the LED is rather quite low for the user. Traffic-mode LED indicates traffic, but most users don't use that information. Moreover, LEDs are often at the backside of the gateway. Nevertheless even if one active LED consumes little energy, a plurality of active LEDs consumes a non-negligible amount of energy.

### SUMMARY OF THE INVENTION

The present invention attempts to remedy at least some of the concerns connected with LED energy consumption in the prior art, by providing a device and a method that optimize the use of the LEDs on the device.

The present invention concerns an electronic device being adapted to run more than one function, the electronic device comprising more than one electronic indicator, the more than one electronic indicator being either enabled or disabled, and consuming energy when being enabled, each one of the more than one electronic indicator being adapted to indicate more than one state of a function, at least one of the state corresponding to a steady mode, a second indicator for indicating that all of the functions are in a steady mode, and ECO mode configuring means for enabling the second indicator and disabling all of the electronic indicators when the functions are all in a steady mode, and for disabling the second indicator and enabling all of the electronic indicators when at least one of the functions is not in a steady mode.

According to an embodiment, the second indicator is one of the electronic indicators.

According to an embodiment, the second indicator is an electronic indicator different from one of the electronic indicators.

According to an embodiment, the electronic indicator is a Light Emitting Diode.

According to an embodiment, the second indicator is a mechanical component that can be set to two positions.

According to an embodiment, the electronic device comprises configuring means for setting, for each function, the state corresponding to the steady mode.

According to an embodiment, the function is a service running on the electronic device or an interface of the electronic device.

Another object of the invention is a method at an electronic device adapted to run more than one function, the electronic device comprising more than one electronic indicator, the more than one electronic indicator being either enabled or disabled, and consuming energy when being enabled, each one of the more than one electronic indicator being adapted to indicate more than one state of a function, at least one of the state corresponding to a steady mode, the electronic device comprising a second indicator for indicating that all of the functions are in a steady mode. The method comprises the steps of enabling the second indicator and disabling all of the electronic indicators when the functions are all in a steady mode, and disabling the second indicator and enabling all of the electronic indicators when at least one of the functions is not in a steady mode.

According to an embodiment, the method comprises the step of, prior to enabling or disabling the electronic indicators, setting, for each function, the state corresponding to the steady state.

According to an embodiment, the method comprises the step of, when the functions turn all into a steady mode, starting a timer, and when the timer expires, enabling the second indicator and disabling all of the electronic indicators.

### BRIEF DESCRIPTION OF THE DRAWINGS

The invention will be better understood and illustrated by means of the following embodiment and execution examples, in no way limitative, with reference to the appended figures on which:
- Figure 1 shows a residential gateway compliant with the embodiment;
- Figure 2 shows a user interface compliant with the embodiment;
- Figure 3 shows LED states according to the embodiment; and
- Figure 4 is a flow chart of a LED ECO mode function according to the embodiment.

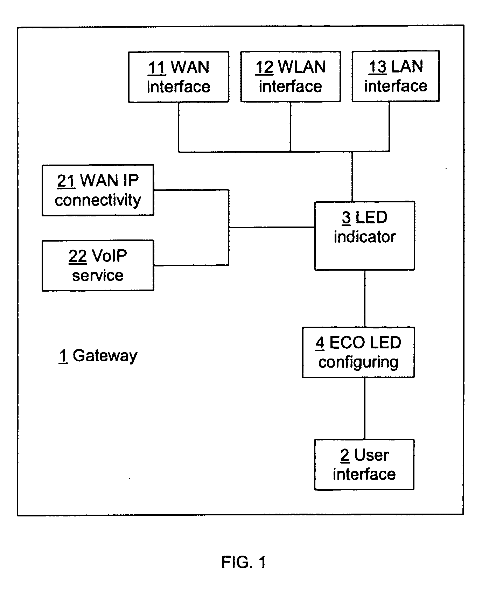

In Figure 1, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of residential gateways, but the invention is not limited to this particular environment and may be applied within other frameworks where a plurality of LEDs are used to indicate the status of a device. Namely, it can be used in any electronic device that offers a plurality of services or functions that can be enabled or disabled, which are indicated with LEDs. More generally the invention could be used in a device comprising a plurality of indicators, functionally equivalent to the LED of the embodiment, wherein the indicators consume energy. Such an indicator could be a lamp.

The residential gateway 1 according to the embodiment is illustrated in figure 1. In particular, the modules relevant to the embodiment are represented. The gateway comprises a plurality of interfaces well known per se in a residential gateway, such as a WAN interface 11, a LAN interface 13 and a WLAN interface 12. It also comprises a WAN IP connectivity module 21 that is adapted to set up and control the connectivity to the Internet. It also comprises a VolP service module 22, which is adapted to set up and control the voice over IP service. The gateway comprises a LED indicator module 3, which comprises a plurality of LEDs adapted to indicate the status of each one of the plurality of interfaces or services of the gateway, in a manner well known per se in the residential gateways. According to the embodiment, the LED indicator module also comprises an ECO LED, also called an all-steady LED hereinafter, that is adapted to indicate the status of the interfaces and services as detailed hereinafter. The ECO LED configuring module 4 is adapted to perform the LED energy saving function that is detailed hereinafter. The parameters of the LED energy saving function are configurable through the user interface 2. Each LED independently consumes energy in a manner well known per se.

More generally, a LED represents a function that is a service or an interface. A LED shows a number of sub-states going from OFF state to a non-transient final normal operation state, in which the function is supposed to operate normally. When this condition is reached, the LED may then show traffic indication if traffic happens.

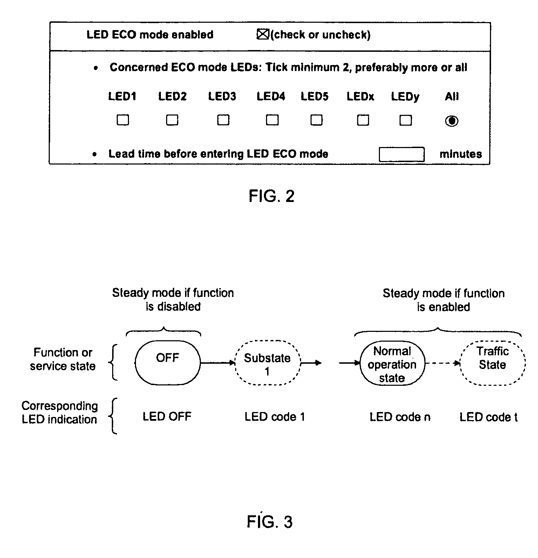

The indication of a LED representing a function is indicated in figure 3. The figure 3 shows also the function states that can be considered as steady mode. According to the figure 3, a function is in a steady mode when it is disabled, and the LED is OFF. The function is also in a steady mode when it is enabled and operating in normal operation state, the LED shows traffic in normal operation state.

The following table shows a number of LEDs with the function they represent and the function steady mode. For example, the power LED set to green represents the normal operation and corresponds to a steady mode. When green, the Ethernet LED corresponds to a steady mode.

| LED TYPE | COLOR | FLASHING | MEANING | STEADY MODE |
|---|---|---|---|---|
| Power LED | Green | Solid on | Power on, normal operation | Yes |
| | Red | Solid on | Power on, self-test failed, indicating device malfunction | No |
| | Amber | Blinking | Boot loader active (during upgrade) | No |
| | Off | Off | Power off | No |
| Ethernet LED per port | Green | Blinking | Ethernet activity | Yes |
| | Green | Solid on | Ethernet connection, no activity | Yes |
| | Off | Off | No Ethernet connection | No |
| Wireless LED (wireless AP) | Green | Blinking | Wireless activity, WPA(2) encryption | Yes |
| | Green | Solid on | No wireless activity, WPA(2) encryption | Yes |
| | Amber | Blinking | Wireless activity, WEP encryption | No |
| | Amber | Solid on | No wireless activity, WEP encryption | Yes |
| | Red | Blinking | Wireless activity, no security | Yes |
| | Red | Solid on | No wireless activity, no security | Yes |
| | Red/green | Toggling | Wireless client registration phase | No |
| | Off | | WLAN disabled | No |
| Broadband LED (DSL line) | Green | Blinking | Pending DSL line synchronisation | No |
| | Green | Solid on | DSL line synchronised | Yes |
| | Off | Off | No DSL line | No |
| Internet LED (Authentication + IP address) | Green | Blinking | Internet activity | Yes |
| | Green | Solid on | Internet connectivity, no activity | Yes |
| | Red | Solid on | Internet connection setup failed | No |
| | Off | Off | No Internet connection | No |
| Phone LED (Registration VolP service) WPS LED | Green | Solid on | VoIP service up | Yes |
| | Green | Blinking | VoIP activity | Yes |
| | Off | Off | VolP service down | No |
| | Green | Solid On | Client successfully registered via WPS | Yes |
| | Amber | Blinking | WPS registration ongoing | No |
| | Red | Blinking | Error occurred | No |

According to the embodiment, an 'all-steady mode' corresponds to the mode where the residential gateway is running into a normal operation mode. It means that the interfaces and services of the gateway run in a steady mode.

According to the embodiment, the gateway comprises an ECO mode function. After the gateway has reached for some period the all-steady mode, all LEDs are being switched OFF. Another LED, an all-steady indication LED, is being switched ON to indicate that the gateway is into the all-steady mode. Of course, instead of using a new LED, a LED used for an interface or a service could also be reused as the all-steady indication LED. Using an all-steady indication LED instead of the plurality of LEDs permits to save energy in the gateway.

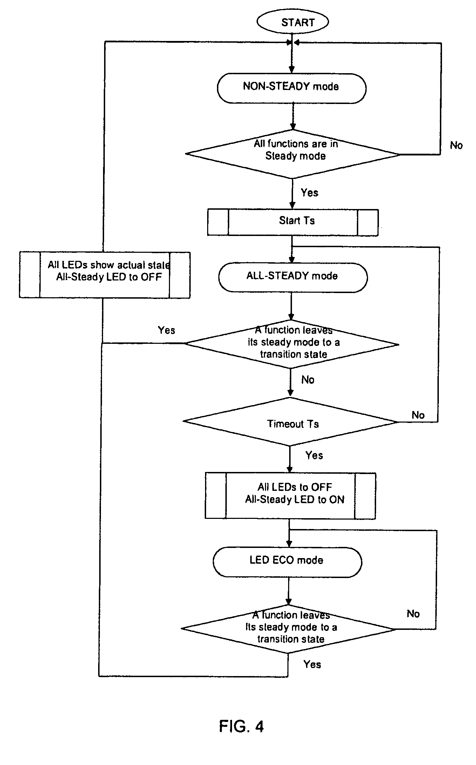

The ECO LED configuring module 4 permits to configure the behavior of the ECO mode function. It permits to activate or deactivate the automatic use of ECO mode function. If activated, the ECO LED is automatically switched ON when the gateway is in the all-steady mode. This means that when all LEDs come into steady mode, after a time Ts, these LEDs are switched OFF and the all-steady LED switches ON, according to the figure 4 further described hereinafter.

The ECO LED configuring module 4 also permits to configure the LEDs that are subject to all-steady LED indication. Replacing all Steady mode LEDs by the ECO LED permits to optimize power consumption of the gateway. Replacing only a subset of the Steady mode LEDs permits to reduce power consumption while still controlling the behavior of some interface or service. For example the end user may whish to control the use of the WLAN interface. It may then configure the ECO LED by replacing the Steady mode interface LEDs, not including the Steady mode WLAN interface LED, by the ECO LED. Then, when the gateway is set to the all-steady mode, the LED corresponding to the WLAN interface is still active.

The user interface permits the system administrator to configure the LED energy saving function, and in particular the LED ECO mode, on a screen providing following information such as indicated in Figure 2. The user interface enables the system administrator to indicate which LEDs are subject to LED ECO mode and which are not. In other words, a number of LEDs can be involved in the ECO mode and the LED ECO mode can be activated / deactivated. Instead of LED1, LED2, etc, the appropriate name might be used, such as Power LED or Wireless LED. The function corresponding to each LED might also be indicated.

Of course instead of configuring locally, the system administrator could configure the LED ECO mode remotely. The LED ECO mode could also be configured by an operator remotely, using configuration protocol such as the CPE WAN Management Protocol TR69 standard, version 1.1 of December 2007.

The user interface also permits to configure the TS timer duration. The timer duration can be set from zero second to several minutes.

Figure 4 shows the state diagram of a LED ECO mode function. The period Ts allows the user to perceive the function LEDs in steady mode during a certain time, in order to assure him a good system operation. As soon as one function leaves its steady mode, the all-steady LED is switched OFF and the LEDs are switched ON to indicate the actual sub-state of the function that they represent.

The gateway starts in a NON-STEADY mode. When all functions are in a Steady mode, the TS timer starts, and the gateway switches to the ALL-STEADY mode. When the TS timer expires, the LED ECO mode is set; all LEDs are switched OFF and the all-steady LED is switched ON. As soon as one of the function leaves its Steady mode, the ALL-STEADY mode or the LED ECO mode is released, and the gateway switches to the NON-STEADY mode; the all-steady LED is switched off and all LEDs are switched ON to show the respective actual states.

Of course, if the end user has selected a subset of LEDs subject to LED ECO mode, the diagram illustrated in figure 4 applies to the selected LEDs only.

In the embodiment the all-steady mode is indicated with a LED, the all-steady LED, that also consumes energy when enabled. Alternatively, the all-steady mode is indicated with a mechanical component. That mechanical component can be set to two positions ON and OFF. To move from one position to the other one, it requires an impulse that consumes energy.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. An electronic device being adapted to run more than one function, said electronic device comprising:
- more than one electronic indicator, said more than one electronic indicator being either enabled or disabled, and consuming energy when being enabled, each one of said more than one electronic indicator being adapted to indicate more than one state of a function, at least one of said state corresponding to a steady mode,
- a second indicator for indicating that all of said functions are in a steady mode, and
- ECO mode configuring means for enabling said second indicator and disabling all of said electronic indicators when said functions are all in a steady mode, and for disabling said second indicator and enabling all of said electronic indicators when at least one of said functions is not in a steady mode.

2. An electronic device according to claim 1, said second indicator being one of said electronic indicators.

3. An electronic device according to claim 1, said second indicator being an electronic indicator different from one of said electronic indicators.

4. An electronic device according to any one of the preceding claims, said electronic indicator being a Light Emitting Diode.

5. An electronic device according to claim 1, said second indicator being a mechanical component.

6. An electronic device according to any one of the preceding claims, comprising configuring means for setting, for each function, the state corresponding to the steady mode.

7. An electronic device according to any one of the preceding claims, said function being a service running on said electronic device or an interface of said electronic device.

8. A method at an electronic device adapted to run more than one function, said electronic device comprising more than one electronic indicator, said more than one electronic indicator being either enabled or disabled, and consuming energy when being enabled, each one of said more than one electronic indicator being adapted to indicate more than one state of a function, at least one of said state corresponding to a steady mode, said electronic device comprising a second indicator for indicating that all of said functions are in a steady mode,
said method comprising the steps of:
enabling said second indicator and disabling all of said electronic indicators when said functions are all in a steady mode, and
disabling said second indicator and enabling all of said electronic indicators when at least one of said functions is not in a steady mode.

9. Method according to the preceding claim, comprising the step of, prior to enabling or disabling said electronic indicators, setting, for each function, the state corresponding to the steady state.

10. Method according to any one of claims 8 or 9, comprising the step of, when said functions turn all into a steady mode, starting a timer, and when the timer expires, enabling said second indicator and disabling all of said electronic indicators.
